# FASCICULE DE BREVET EUROPEEN

(11) **EP 2 843 192 B1**
(45) Date de publication et mention de la délivrance du brevet: **24.03.2021**
(21) Numéro de dépôt: 13181970.8
(22) Date de dépôt: 28.08.2013
(51) Int. Cl.: F01D 5/28, B22F 5/04, B22F 7/08

(54) **Aube composite réalisée par fabrication additive et procédé de fabrication associé**
Verbundstoff-Laufradschaufel, die durch additives Fertigungsverfahren herstellt wird und entsprechendes Herstellungsverfahren
Composite blade made by additive manufacturing and associated manufacturing process

(43) Date de publication de la demande: 04.03.2015
(73) Titulaire: Safran Aero Boosters SA, 4041 Herstal (BE)
(72) Inventeur: CORTEQUISSE Jean-François, 3870 HEERS (BE)
(74) Mandataire: Lecomte & Partners

(56) Documents cités:
- EP-A1- 2 319 641
- EP-A1- 2 620 240
- EP-A2- 1 681 440
- CN-A- 103 113 112
- CN-B- 101 649 844
- DE-A1-102009 048 665
- DE-C1- 19 627 860
- US-A- 3 892 612
- US-A1- 2012 201 686

## Description

### Domaine technique

L'invention a trait à une aube composite de turbomachine. Plus particulièrement, l'invention a trait à une aube composite avec un renfort et une matrice. L'invention a également trait à une turbomachine avec une aube selon l'invention. L'invention a également trait à un procédé de fabrication d'une aube composite avec un renfort et une matrice.

### Technique antérieure

Une turbomachine axiale comprend des rangées annulaires d'aubes rotoriques permettant d'accélérer un flux d'air, et des rangées annulaires d'aubes statoriques qui redressent le flux d'air accéléré. Les aubes doivent être légères pour réduire la masse de la turbomachine. En particulier, l'allégement des aubes rotoriques permet de réduire l'inertie du rotor.

L'allégement d'une aube doit néanmoins respecter des critères de résistance mécanique. Une aube doit résister à des vibrations et éventuellement à des ingestions dans la turbomachine. De plus, une aube rotorique doit résister aux efforts centrifuges. Le choix d'un matériau composite pour réaliser une aube est un compromis pour réduire sa masse tout en conservant une certaine résistance mécanique.

Il est connu du document FR 2 204 215 A5 une aube composite de rotor de turbosoufflante axiale. L'aube comprend une structure primaire formée d'un empilement de feuilles composites. Ces feuilles comportent des fibres longues de graphites qui sont noyées dans une résine polymérisée. En complément, l'aube comprend plusieurs couches de treillis métalliques insérées entre les feuilles composites et plaquées par-dessus la structure primaire. Les treillis métalliques sont remplis à l'avance de résine qui réticule avec la résine de l'empilement lors du moulage. Cependant, la résistance mécanique d'une telle aube est réduite. De plus, sa fabrication nécessite plusieurs opérations de préparation et de manipulation de feuilles qui augmentent le coût d'une telle aube.

Le document US 2012/0201686 A1 divulgue une aube composite de turbomachine axiale. L'aube comprend un cadre dans lequel est placé un corps métallique alvéolé. Le corps est réalisé par fabrication additive, et ses alvéoles sont remplies d'un matériau composite à matrice polymère. Or, la masse d'une telle aube reste pénalisante.

Le document CN 103113112 A divulgue une aube composite avec une matrice et un renfort réalisé par impression 3D. La géométrie du renfort n'est cependant pas détaillée.

Le document EP 1 681 440 A2 divulgue une aube de turbomachine selon le préambule de la revendication 1, et un procédé itératif de fabrication d'une aube composite de turbomachine, selon le préambule de la revendication 9.

### Résumé de l'invention

### Problème technique

L'invention a pour objectif de résoudre au moins un des problèmes techniques posés par l'art antérieur. Plus particulièrement, l'invention a pour objectif de renforcer une aube composite. L'invention a également pour objectif de proposer un procédé de réalisation d'une aube selon l'invention.

### Solution technique

L'invention a trait à une aube de turbomachine, l'aube comprenant un matériau composite avec une matrice et un renfort comprenant un treillis, l'aube comportant un bord d'attaque, un bord de fuite, une surface intrados et une surface extrados qui s'étendent du bord d'attaque au bord de fuite, le treillis forme une structure tridimensionnelle s'étendant sur la majorité de l'épaisseur de l'aube entre la surface intrados et la surface extrados, remarquable en ce que la structure tridimensionnelle du renfort est une structure unitaire avec des tiges reliées entre elles avec continuité de matière par des nœuds de liaison.

Selon un mode avantageux de l'invention, le treillis forme une structure tridimensionnelle s'étendant sur la majorité de la longueur de l'aube entre le bord d'attaque et le bord de fuite.

Selon un mode avantageux de l'invention, les tiges sont orientées selon au moins trois directions non coplanaires, préférentiellement selon au moins quatre directions non coplanaires.

Selon un mode avantageux de l'invention, le renfort occupe plus de 60%, préférentiellement plus de 80%, de l'épaisseur de l'aube entre la surface intrados et la surface extrados.

Selon un mode avantageux de l'invention, la densité volumique du treillis entre la surface intrados et la surface extrados varie suivant la hauteur de l'aube et/ou du bord d'attaque au bord de fuite.

Selon un mode avantageux de l'invention, le renfort comprend, en outre, une ou plusieurs parois formant le bord d'attaque, et/ou le bord de fuite, et/ou la surface intrados, et/ou la surface extrados de l'aube, ladite ou lesdites parois étant préférentiellement unitaires avec le treillis.

Selon un mode avantageux de l'invention, la matrice et le renfort sont réalisés en des matériaux différents, la matrice comprenant une résine thermoplastique et le renfort comprenant du métal, préférentiellement du titane.

Selon un mode avantageux de l'invention, le renfort est venu de matière et réalisé par un procédé de fabrication additionnelle par couches.

Selon un mode avantageux de l'invention, la structure tridimensionnelle s'étend en travers de l'épaisseur de l'aube sur la majorité de l'épaisseur de l'aube.

Selon un mode avantageux de l'invention, la structure tridimensionnelle s'étend perpendiculairement à la surface extrados sur la majorité de l'épaisseur de l'aube.

Selon un mode avantageux de l'invention, la structure tridimensionnelle forme un maillage tridimensionnel.

Selon un mode avantageux de l'invention, la structure tridimensionnelle comprend une enveloppe, éventuellement une enveloppe générale, qui délimite un espace occupant la majorité du volume entre la surface intrados et la surface extrados.

Selon un mode avantageux de l'invention, les tiges qui sont liées les unes aux autres sont chacune directement fixées à d'autres tiges.

Selon un mode avantageux de l'invention, le renfort comprend plus de cent, préférentiellement plus de mille tiges reliées les unes aux autres.

Selon un mode avantageux de l'invention, les tiges sont réparties dans le volume entre la surface intrados et la surface extrados.

Selon un mode avantageux de l'invention, au moins une tige est courbe.

Selon un mode avantageux de l'invention, au moins une tige présente une variation de section.

Selon un mode avantageux de l'invention, les tiges sont de longueurs variables.

Selon un mode avantageux de l'invention, au moins une tige est généralement sphérique.

Selon un mode avantageux de l'invention, au moins une tige est généralement cubique.

Selon un mode avantageux de l'invention, la densité volumique en tige est comprise entre 1% et 80% du volume entre la surface intrados et la surface extrados, préférentiellement comprise entre 5% et 50%, plus préférentiellement comprise entre 10% et 20%.

Selon l'invention, l'ensemble des différentes caractéristiques techniques énumérées ci-dessus peuvent être combinées.

L'invention a également trait à un procédé itératif de fabrication d'une aube composite de turbomachine, l'aube comprenant une matrice, un renfort, un bord d'attaque, un bord de fuite, une surface intrados et une surface extrados qui s'étendent du bord d'attaque au bord de fuite, le renfort comprenant un treillis, le treillis formant une structure tridimensionnelle s'étendant sur la majorité de l'épaisseur de l'aube entre la surface intrados et la surface extrados, remarquable en ce que la structure tridimensionnelle du renfort est une structure unitaire avec des tiges reliées entre elles avec continuité de matière par des nœuds de liaison, et la matrice et le renfort sont réalisés simultanément par fabrication additionnelle par couches, préférentiellement à base de poudres.

Selon un mode avantageux de l'invention, le procédé comprend la répétition des étapes suivantes : (a) dépôt de matériau d'apport formant le renfort; (b) cohésion du matériau d'apport formant le renfort; (c) refroidissement; (d) dépôt de matériau d'apport formant la matrice; (e) cohésion du matériau d'apport formant la matrice; l'étape (c) refroidissement étant optionnelle.

Selon un mode avantageux de l'invention, les étapes (a) et (d) sont réalisées simultanément et/ou les étapes (b) et (e) sont réalisées simultanément.

Selon un mode avantageux de l'invention, la structure tridimensionnelle du renfort est une structure unitaire avec des tiges reliées entre elles avec continuité de matière par des nœuds de liaison, et la majorité des tiges sont inclinées par rapport aux couches, préférentiellement inclinées de plus de 5°, plus préférentiellement inclinées de plus de 15°.

Selon un mode avantageux de l'invention, la structure tridimensionnelle du renfort est une structure unitaire avec des tiges reliées entre elles avec continuité de matière par des nœuds de liaison, et les couches sont empilées selon une direction d'empilement, les tiges sont en majorité inclinées par rapport à la direction d'empilement, préférentiellement à plus de 10°, plus préférentiellement à plus de 20°.

Selon un mode avantageux de l'invention, la structure tridimensionnelle du renfort est une structure unitaire avec des tiges reliées entre elles avec continuité de matière par des nœuds de liaison, et la rugosité Ra des tiges est supérieure à 2 µm, préférentiellement supérieure à 10 µm, plus préférentiellement supérieure à 50 µm.

Selon un mode avantageux de l'invention, l'épaisseur des couches est inférieure à 200 µm, préférentiellement inférieure à 50 µm, plus préférentiellement inférieure à 10 µm.

Selon un mode avantageux de l'invention, les poudres comprennent des grains de diamètre inférieur à 200 µm, préférentiellement inférieur à 2 µm, plus préférentiellement inférieur à 50 nm.

Selon un mode avantageux de l'invention, la cohésion s'effectue par réchauffement des poudres, préférentiellement à l'aide d'un laser ou d'un faisceau d'électrons.

Selon un mode avantageux de l'invention, le procédé comprend une répétition, préférentiellement plusieurs répétitions des étapes a) dépôt du matériau d'apport formant le renfort, et b) cohésion du matériau d'apport formant le renfort, entre deux réalisations de l'étape d) dépôt du matériau d'apport formant la matrice.

L'invention a également trait à une turbomachine comprenant au moins une aube, remarquable en ce que l'aube est conforme à l'invention et/ou l' aube est fabriquée selon un procédé de fabrication d'une aube composite conforme à l'invention.

### Avantages apportés

L'invention permet de renforcer une aube composite en la dotant d'un renfort tridimensionnel s'étendant à cœur. Un tel renfort apporte à l'aube une résistance mécanique homogène face aux contraintes. Le renfort forme une ossature hétérogène grâce aux tiges dont les formes sont adaptées localement en réponse aux contraintes subies par le matériau composite. En complément, les tiges et les parois sont solidaires, ce qui permet d'améliorer la robustesse de l'ensemble.

L'emploi d'un procédé de fabrication additionnelle permet de réaliser une aube en réduisant la manutention nécessaire à une telle aube. La réalisation simultanée du renfort et de la matrice permet de réaliser des formes complexes. Cette technique facilite par exemple la réalisation de canaux courbes, qui s'étendent le long de la pale et qui sont délimités à la fois par la matrice et par le renfort. Par ailleurs, la fabrication additionnelle, par exemple à base de poudres, crée des tiges avec une surface granuleuse qui favorise l'ancrage de la matrice sur chaque tige.

### Brève description des dessins

La figure 1 représente une turbomachine axiale selon l'invention.
La figure 2 est un schéma d'un compresseur de turbomachine selon l'invention.
La figure 3 illustre une aube selon l'invention.
La figure 4 schématise une coupe de l'aube selon l'invention suivant l'axe 4-4 tracé sur la figure 3.
La figure 5 esquisse un agencement de tiges du renfort de l'aube selon un premier mode de réalisation de l'invention.
La figure 6 illustre un agencement de tiges du renfort de l'aube selon un deuxième mode de réalisation de l'invention.
La figure 7 représente un diagramme d'un procédé itératif de fabrication d'une aube selon un troisième mode de réalisation de l'invention.
La figure 8 illustre un diagramme d'un procédé itératif de fabrication d'une aube selon un quatrième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale.

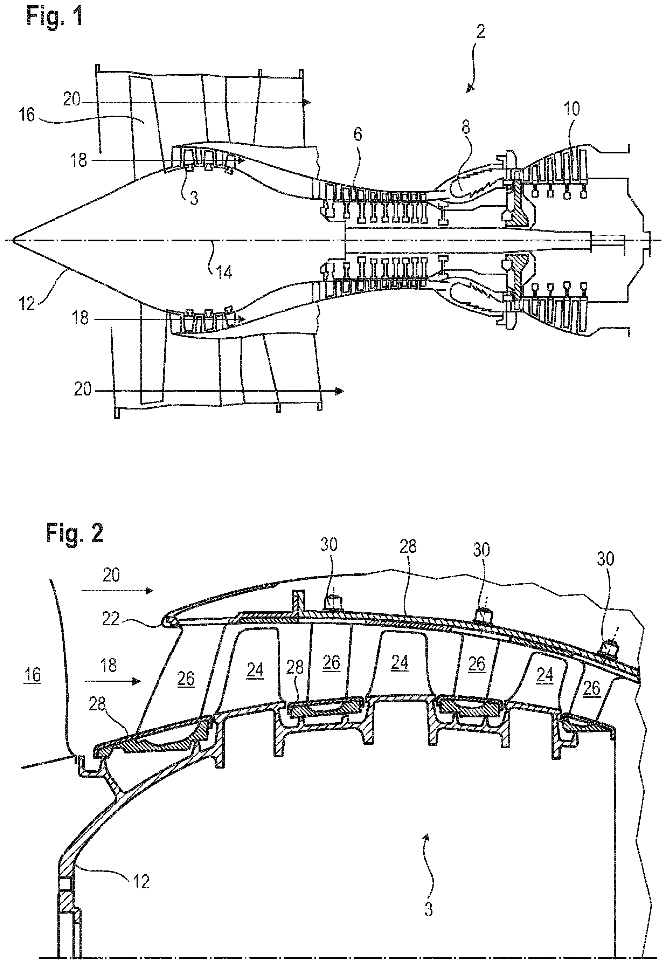

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 3, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 3 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale 2 telle que celle de la figure 1. Le compresseur peut être un compresseur basse-pression 3 ou haute-pression. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 3 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement depuis un carter extérieur 28, et peuvent y être fixées à l'aide de moyens de fixation telle une tige fileté 30. Elles sont régulièrement espacés les unes des autres, et présentent une même orientation angulaire dans le flux. Avantageusemsent, les aubes d'une même rangée sont identiques. Eventuellement, l'espacement entre les aubes peut varier localement tout comme leur orientation angulaire. Certaines aubes peuvent être différentes du reste des aubes de leur rangée.

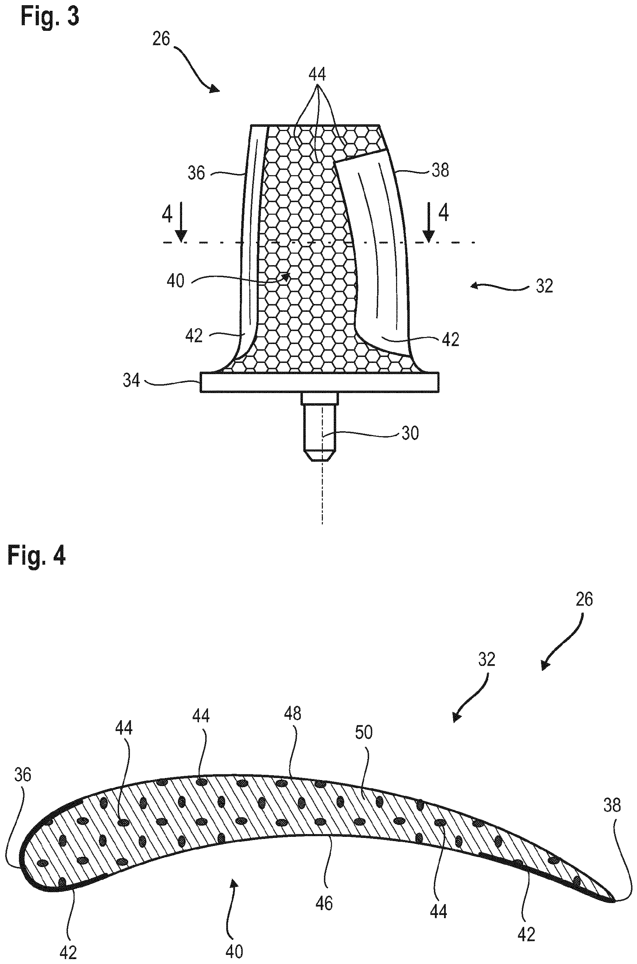

La figure 3 est une illustration d'une aube statorique 26 de redresseur selon l'invention. L'aube peut être une aube de compresseur ou une aube de turbine.

L'aube 26 comprend une pale 32, ou corps, destinée à s'étendre dans le flux annulaire. Elle peut comprendre une plateforme extérieure 34 destinée à être fixée au carter extérieur du compresseur. Eventuellement l'aube 32 comporte une deuxième plateforme, disposée à l'intérieur. Des moyens de fixation 30 peuvent s'étendre depuis la plateforme 34 à l'opposé de la pale 32. La pale de l'aube peut être directement fixée au carter de la turbomachine, par exemple par soudage. Dans cette éventualité, l'aube peut être libre de plateforme externe. L'extrémité intérieure de l'aube peut comprendre une ouverture pour servir d'ancrage à une virole annulaire interne.

Suivant une alternative de l'invention, l'aube peut être une aube rotorique. En guise de moyen de fixation, une telle aube peut comprendre une queue d'arronde destinée à être insérée dans une gorge correspondante du rotor. L'aube peut être une aube de fan.

L'aube 26 présente un bord d'attaque 36 disposé en amont, et un bord de fuite 38 disposé en aval. Elle présente en outre une surface intrados disposée du côté refoulement de l'aube, et une surface extrados disposée du côté aspiration de l'aube. La surface intrados et la surface extrados s'étendent depuis le bord d'attaque 36 jusqu'au bord de fuite 38. Elles sont respectivement incurvée et bombée, et définissent la forme de la pale 32.

L'aube 26 comprend un matériau composite avec une matrice (non représentée) et un renfort 40. Le renfort 40 comprend un treillis qui forme une structure tridimensionnelle. La structure tridimensionnelle peut s'étendre dans la majorité du volume de la pale 32 de l'aube, éventuellement dans la totalité dudit volume. La structure tridimensionnelle s'étend sur la majorité de l'épaisseur de l'aube entre la surface intrados et la surface extrados. La structure tridimensionnelle peut s'étendre sur la majorité de la longueur de l'aube 26 entre le bord d'attaque 36 et le bord de fuite 38. L'épaisseur de l'aube peut être considérée perpendiculairement à sa corde, la longueur de l'aube peut être considérée le long de la corde.

La structure tridimensionnelle peut comprendre un maillage tridimensionnel, qui est éventuellement défini par des polyèdres remplissant le volume entre la surface intrados et la surface extrados. Les polyèdres peuvent être définis par des nœuds de liaison. Le renfort peut présenter des alvéoles communicantes qui forment un réseau de canaux qui s'étendent sur la majorité de l'aube, préférentiellement qui s'étendent généralement sur l'ensemble du volume de la pale. L'espace creux du renfort est comblé par la matrice. Avantageusement, la ou les plateformes et/ou les moyens de fixation sont solidaires du renfort. Préférentiellement, ils sont venus de matière.

De manière optionnelle, le renfort 40 de l'aube 26 comprend une paroi 42 formant le bord d'attaque de l'aube. La paroi 42 peut être une tôle s'étendant du côté intrados et du côté extrados. Le renfort 40 de l'aube peut comprendre une paroi 42 formant au moins une portion de la surface extrados ou au moins une portion de la surface intrados de sorte à protéger l'aube 26 contre l'abrasion.

La structure tridimensionnelle comprend des tiges 44. Les tiges 44 sont reliées ou fixées les unes aux autres, par exemple avec continuité de matière via les nœuds de liaison ou jonctions. Préférentiellement, chacune des tiges est directement reliée à d'autres tiges, éventuellement à plus de trois autres tiges. Ces tiges 42 sont réparties ou éparpillées dans le volume entre la surface intrados et la surface intrados. Ces tiges 44 peuvent être réparties dans la majorité dudit volume, préférentiellement dans l'ensemble dudit volume. Les tiges 44 peuvent être reliées les unes aux autres par leurs extrémités. Elles sont disposées bout à bout.

Le renfort 40 est avantageusement venu de matière. Les tiges 44 liées entre elles sont venues de matière, préférentiellement les parois 42 et les tiges 44 sont venues de matière. Ainsi, les tiges 44 sont solidaires des parois 42 et forment un ensemble mécanique monobloc.

La figure 4 ébauche une coupe de l'aube selon l'axe 4-4 tracé sur la figure 3.

L'épaisseur moyenne du renfort 40 peut représenter plus de 10%, préférentiellement plus de la moitié de l'écartement moyen entre la surface intrados 46 et la surface extrados 48 de l'aube. Eventuellement, l'épaisseur moyenne de l'espace occupé par les tiges 44 liées les unes aux autres représente plus de 10%, préférentiellement plus de la moitié de l'écartement moyen entre la surface intrados 46 et la surface extrados 48.

Les tiges 44 sont noyées dans la matrice 50. La matrice 50 occupe la majorité du volume de la pale 32, préférentiellement plus de 75%. La matrice 50 peut former la majorité de la surface intrados 46 et/ou de la surface extrados 48. Des tiges 44 peuvent affleurer et former des portions de la surface intrados 46 et/ou de la surface extrados 48. La matrice 50 peut former le bord d'attaque 36 et/ou le bord de fuite 38.

Les tiges 44 sont généralement liées à d'autres tiges 44. La majorité des tiges 44 sont liées à plusieurs autres tiges 44, préférentiellement au moins six, plus préférentiellement au moins huit autres tiges 44. Les tiges 44 reliées les unes aux autres forment des liaisons mécaniques continues qui s'étendent du bord d'attaque 36 au bord de fuite 38, et/ou de la surface intrados 46 à la surface extrados 48, et/ou de l'extrémité interne de la pale à l'extrémité externe de la pale. Ces liaisons mécaniques présentent une continuité de matière. Les tiges reliées entre elles peuvent former la structure tridimensionnelle. Elles peuvent former un treillis tridimensionnel. Par treillis tridimensionnel on entend par exemple un ensemble comprenant plusieurs treillis parallèles qui sont reliés entre eux à l'aide de tiges transversales.

Le renfort 40 et la matrice 50 sont réalisés en des matériaux différents. Le renfort 40 peut être métallique, préférentiellement en titane, éventuellement en acier ou en aluminium. La matrice 50 peut être un polymère, par exemple une résine thermoplastique telle du polyétherimide (PEI). Ou encore, le renfort 40 peut comprendre un matériau céramique, préférentiellement être essentiellement réalisé en céramique et comprendre une résine polymère. Suivant une autre alternative de l'invention, le renfort peut être métallique et comprendre une matrice céramique.

Le matériau du renfort peut présenter un module d'élasticité supérieur au module d'élasticité du matériau de la matrice. Eventuellement, la résistance à la rupture du matériau du renfort est supérieure à la résistance à la rupture du matériau de la matrice.

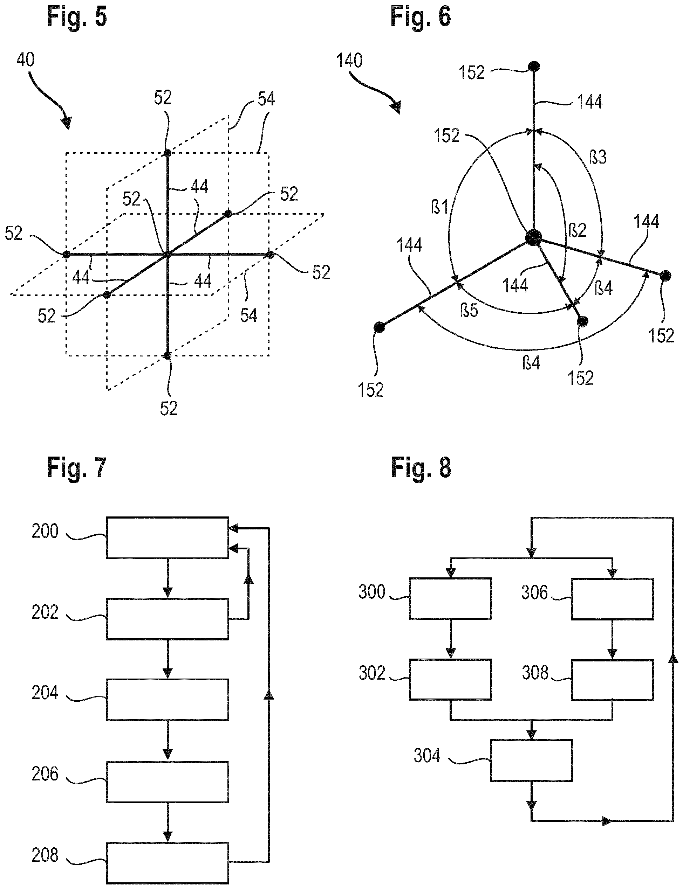

La figure 5 ébauche un agencement des tiges 44 d'une portion du renfort 40 de l'aube selon un premier mode de réalisation de l'invention. L'orientation des tiges peut varier localement.

Les tiges 44 sont agencées selon trois directions non coplanaires. Les trois directions peuvent être inclinées les unes par rapport aux autres selon des angles différents. Les trois directions peuvent être à angle droit. Les tiges 44 délimitent alors des hexaèdres tels des cubes dont les arrêtes peuvent être inclinées par rapport à la hauteur de l'aube.

Les tiges 44 reliées entre elles forment des nœuds de liaison 52. Les nœuds de liaison sont généralement répartis selon trois jeux de plans 54. Chaque jeu de plans 54 comprend des plans parallèles, les jeux de plans 54 étant inclinés les uns par rapport aux autres. Un même nœud de liaison 52 peut être relié à six autres nœuds de liaison 52, préférentiellement non coplanaires. Les nœuds de liaison peuvent être disposés sur des jeux de surfaces incurvées, par exemple des surfaces épousant généralement la surface intrados ou la surface extrados de l'aube.

Les tiges 44 présentent généralement une même longueur et une même section. Les tiges 44 peuvent être droites et rondes. Cependant, la longueur des tiges 44 peut varier, tout comme leurs sections. Une tige peut présenter une section différente des autres tiges. Une même tige peut voir sa section évoluer, par exemple en diamètre ou en nature. Une tige peut présenter une section ronde à une extrémité et une section carrée à l'autre extrémité. Au moins une tige peut être courbe ou coudée. Au moins une tige peut être plate, sphérique ou cubique.

Les tiges 44 peuvent présenter une longueur inférieure à 40 mm, préférentiellement inférieure à 10 mm, plus préférentiellement inférieure à 2 mm. Les tiges 44 peuvent présenter une largeur inférieure à 5 mm, préférentiellement inférieure à 0,50 mm, plus préférentiellement inférieure à 0,10 mm.

La figure 6 représente un agencement des tiges 144 d'une portion du renfort 140 de l'aube selon un deuxième mode de réalisation de l'invention. Cette figure 6 reprend la numérotation des figures précédentes pour les éléments identiques ou similaires, la numération étant toutefois incrémentée de 100.

Les tiges 144 sont agencées selon quatre directions non coplanaires, préférentiellement selon au moins quatre directions non coplanaires. Un nœud de liaison 152 de tiges 144 est relié à quatre autres nœuds de liaison 152 de tiges 144 qui forment un tétraèdre dont le centre peut être occupé par le nœud de liaison commun. L'orientation et la longueur des tiges peuvent varier au sein du renfort. Les quatre directions définissent entre elles des angles différents (β1, β2, β3, β4, β5, β6). Ces angles peuvent être égaux.

Suivant une alternative de l'invention, les tiges du renfort peuvent être agencées selon six directions, certaines directions pouvant être coplanaires. Les tiges peuvent former des pyramides à base triangulaire. Dans cette configuration, un même nœud de liaison peut être directement relié à douze autres nœuds de liaison.

Suivant une autre alternative de l'invention, les tiges du renfort sont agencées en combinant les agencements de tiges présentés ci-dessus.

La figure 7 représente un schéma d'un procédé itératif de fabrication d'une aube selon un troisième mode de réalisation de l'invention.

L'aube est réalisée par fabrication additionnelle par couches. Les couches peuvent être plates et/ou d'épaisseurs constantes. L'aube comprend la réalisation simultanée de son renfort et de sa matrice. L'aube est réalisée par couches de matériaux d'apport. Les matériaux d'apport peuvent être appliqués sous forme fondue, ou sous forme de poudres qui sont solidifiées par après. La cohésion des poudres est assurée par chauffage des poudres, par exemple à l'aide d'un laser ou d'un faisceau d'électrons.

Les poudres présentent des tailles de grains inférieures à 0,50 mm. Eventuellement les poudres sont des nano-poudres, dont les grains présentent des grains de diamètre moyen inférieur ou égal à 50 nanomètres. Les couches formant le renfort peuvent présenter une épaisseur inférieure à 0,50 mm, préférentiellement inférieure à 100 µm. Les couches de renfort peuvent être d'épaisseurs inférieures aux épaisseurs des couches de matrice.

Le procédé itératif de réalisation de l'aube peut comprendre la répétition des étapes suivantes :
- dépôt du matériau d'apport formant le renfort 200,
- cohésion du matériau d'apport formant le renfort 202,
- refroidissement 204,
- dépôt du matériau d'apport formant la matrice 206,
- cohésion du matériau d'apport formant la matrice 208.

Le procédé comprend l'enchaînement des tâches précédentes jusqu'à l'obtention de l'aube totale. L'aube est réalisée par strates. Une strate peut former un profil de l'aube. Chaque strate peut comprendre au moins une couche de matériau du renfort, préférentiellement plusieurs couches de matériau du renfort, et au moins une couche du matériau de la matrice. Certaines strates peuvent comprendre uniquement du matériau formant le renfort, par exemple pour réaliser la plateforme de l'aube ou ses moyens de fixation.

L'étape de refroidissement 204 est optionnelle. Elle peut être bénéfique lorsque les matériaux d'apport du renfort et de la matrice présentent des températures de cohésion éloignée, par exemple si la température de cohésion d'un des matériaux d'apport risque d'endommager l'autre matériau. Une autre solution pour se dispenser de l'étape de refroidissement 204 est de travailler par couches particulièrement minces, dont l'épaisseur permet un refroidissement quasi-instantané du matériau qui vient d'être appliqué. Par exemple, des couches de métal d'épaisseurs inférieures à 200 µm, préférentiellement inférieures à 50 µm, plus préférentiellement inférieures à 20 µm permettent un refroidissement rapide grâce à la capacité thermique des couches précédentes de matériau solidifié.

Le procédé peut comprendre la répétition des étapes de dépôt du matériau d'apport formant le renfort 200 et de cohésion du matériau d'apport formant le renfort 202 avant d'effectuer une étape de dépôt du matériau d'apport formant la matrice 206. Plusieurs cycles de dépôts et cohésions de renfort peuvent être effectués entre deux étapes de dépôt de matrice 206. Certaines tiges peuvent être soudées aux autres tiges, éventuellement la majorité ou la totalité des tiges sont soudées entre elles.

Les couchent forment un empilement éventuellement orienté selon la hauteur de l'aube, la hauteur de l'aube pouvant correspondre à une direction radiale de la turbomachine. Les tiges peuvent être inclinées par rapport à la direction de l'empilement. Préférentiellement, la majorité des tiges sont inclinées par rapport à l'empilement, préférentiellement de plus 5°, plus préférentiellement de plus de 20°. Les tiges peuvent être en majorité inclinées par rapport aux couches, préférentiellement de plus de 5°, plus préférentiellement de plus de 20°.

La surface des tiges peut présenter un aspect granuleux, avec des formes de grains en saillie et des formes de cavités. Cet aspect granuleux peut résulter de grains de matériau, éventuellement de poudre, dont la cohésion conserve la forme générale. La surface des tiges peut présenter une rugosité Ra supérieure à 5 µm, préférentiellement supérieure à 50 µm. La rugosité Ra correspond à la moyenne intégrale des écarts en valeur absolue des variations de hauteur d'un profil donné. Le procédé permet de créer un renfort métallique avec des tiges dont les grains présentent une taille homogène.

Cet état de surface améliore l'ancrage entre les tiges et la matrice. Nous soulignons au passage que le procédé de fabrication additionnelle par couche favorise le remplissage de la surface granuleuse des tiges pas la matrice, et en particulier le remplissage d'éventuelles cavités par la matrice.

L'aube peut être réalisée de manière mixte. Sa plateforme et ses moyens de fixations peuvent être réalisés par moulage, par usinage, par forgeage. La plateforme peut ensuite être utilisée comme base sur laquelle est réalisé le renfort par fabrication additionnelle par couches.

La figure 8 représente un procédé itératif de fabrication d'une aube selon un quatrième mode de réalisation de l'invention. Cette figure 8 reprend la numérotation de la figure précédente pour les éléments identiques ou similaires, la numération étant toutefois incrémentée de 100.

Le procédé comprend la répétition des étapes suivantes :
(a) dépôt du matériau d'apport formant le renfort 300,
(b) dépôt du matériau d'apport formant la matrice 306,
(c) cohésion du matériau d'apport formant le renfort 302,
(d) cohésion du matériau d'apport formant la matrice 308.
(e) refroidissement 304,

L'étape de refroidissement 304 est optionnelle.

Les étapes de dépôt de matériau d'apport 300 et 306 peuvent être réalisées simultanément. De même, les étapes de cohésion de matériau d'apport 300 et 308 peuvent être réalisées simultanément.

Il est évident pour l'homme de l'art que les différents modes de réalisation de l'invention et les différentes variantes peuvent être combinés.

## Revendications

1. Aube (26) de turbomachine (2), l'aube (26) comprenant un matériau composite avec une matrice (50) et un renfort (40) comprenant un treillis, l'aube (26) comportant un bord d'attaque (36), un bord de fuite (38), une surface intrados (46) et une surface extrados (48) qui s'étendent du bord d'attaque au bord de fuite, dans laquelle le treillis forme une structure tridimensionnelle s'étendant sur la majorité de l'épaisseur de l'aube (26) entre la surface intrados (46) et la surface extrados (48) ; **caractérisée en ce que** la structure tridimensionnelle du renfort est une structure unitaire avec des tiges reliées entre elles avec continuité de matière par des nœuds de liaison.

2. Aube (26) selon la revendication 1, **caractérisée en ce que** les tiges (44 ; 144) sont orientées selon au moins trois directions non coplanaires, préférentiellement selon au moins quatre directions non coplanaires.

3. Aube (26) selon l'une des revendications 1 à 2, **caractérisée en ce que** le renfort (40) occupe plus de 60%, préférentiellement plus de 80%, de l'épaisseur de l'aube entre la surface intrados (46) et la surface extrados (48).

4. Aube (26) selon l'une des revendications 1 à 3, **caractérisée en ce que** la densité volumique du treillis entre la surface intrados (46) et la surface extrados (48) varie suivant la hauteur de l'aube (26) et/ou du bord d'attaque (36) au bord de fuite (38).

5. Aube (26) selon l'une des revendications 1 à 4, **caractérisée en ce que** le renfort (40) comprend, en outre, une ou plusieurs parois (42) formant le bord d'attaque, et/ou le bord de fuite, et/ou la surface intrados, et/ou la surface extrados de l'aube (26), ladite ou lesdites parois étant préférentiellement unitaires avec le treillis.

6. Aube (26) selon l'une des revendications 1 à 5, **caractérisée en ce que** la matrice (50) et le renfort (40) sont réalisés en des matériaux différents, la matrice (50) comprenant une résine thermoplastique et le renfort (40) comprenant du métal, préférentiellement du titane.

7. Aube (26) selon la revendication 6, **caractérisée en ce que** le renfort (40) est venu de matière et réalisé par un procédé de fabrication additionnelle par couches.

8. Turbomachine comprenant au moins une aube, **caractérisée en ce que** l'au moins une aube est selon l'une des revendications 1 à 7.

9. Procédé itératif de fabrication d'une aube (26) composite de turbomachine, l'aube (26) comprenant une matrice (50) un renfort (40), un bord d'attaque (36), un bord de fuite (38), une surface intrados (46) et une surface extrados (48) qui s'étendent du bord d'attaque au bord de fuite, le renfort (40) comprenant un treillis, le treillis formant une structure tridimensionnelle s'étendant sur la majorité de l'épaisseur de l'aube (26) entre la surface intrados (46) et la surface extrados (48), **caractérisé en ce que**
la structure tridimensionnelle du renfort est une structure unitaire avec des tiges reliées entre elles avec continuité de matière par des nœuds de liaison, et
la matrice (50) et le renfort (40) sont réalisés simultanément par fabrication additionnelle par couches, préférentiellement à base de poudres.

10. Procédé selon la revendication 9, **caractérisé en ce qu'**il comprend la répétition des étapes suivantes :
(a) dépôt de matériau d'apport formant le renfort (200 ; 300) ;
(b) cohésion du matériau d'apport formant le renfort (202 ; 302) ;
(c) refroidissement (204 ; 304) ;
(d) dépôt de matériau d'apport formant le matrice (206 ; 306) ;
(e) cohésion du matériau d'apport formant la matrice (208 ; 308) ;
l'étape c) refroidissement (204 ; 304) étant optionnelle.

11. Procédé selon la revendication 10, **caractérisé en ce que** les étapes (a) et (d) sont réalisées simultanément et/ou les étapes (b) et (e) sont réalisées simultanément.

12. Procédé selon l'une des revendications 9 à 11, **caractérisé en ce que** l'aube est conforme à la revendication 2 et la majorité des tiges (44 ; 144) sont inclinées par rapport aux couches, préférentiellement inclinées de plus de 5°, plus préférentiellement inclinées de plus de 15°.

13. Procédé selon l'une des revendications 9 à 12, **caractérisé en ce que** l'aube est conforme à la revendication 2 et les couches sont empilées selon une direction d'empilement, les tiges (44 ; 144) sont en majorité inclinées par rapport à la direction d'empilement, préférentiellement à plus de 10°, plus préférentiellement à plus de 20°.

14. Procédé selon l'une des revendications 9 à 13, **caractérisé en ce que** l'aube est conforme à la revendication 2 et la rugosité Ra des tiges (44 ; 144) est supérieure à 2 µm, préférentiellement supérieure à 10 µm, plus préférentiellement supérieure à 50 µm.

15. Procédé selon l'une des revendications 9 à 14, **caractérisé en ce que** l'épaisseur de couches est inférieure à 200 µm, préférentiellement inférieure à 50 µm, plus préférentiellement inférieure à 10 µm.

## Patentansprüche

1. Schaufel (26) einer Turbomaschine (2), wobei die Schaufel (26) ein Verbundmaterial mit einer Matrix (50) und einer Verstärkung (40), die ein Netz umfasst, umfasst, wobei die Schaufel (26) eine Vorderkante (36) und eine Hinterkante (38) aufweist, eine Druckfläche (46) und eine Saugfläche (48), die sich von der Vorderkante zur Hinterkante erstrecken, wobei das Netz eine dreidimensionale Struktur bildet, die sich über den größten Teil der Dicke der Schaufel (26) zwischen der Druckfläche (46) und der Saugfläche (48) erstreckt; **dadurch gekennzeichnet, dass** die dreidimensionale Struktur der Bewehrung eine einheitliche Struktur mit Stäben ist, die durch Verbindungsknoten mit Materialkontinuität miteinander verbunden sind.

2. Schaufel (26) nach Anspruch 1, **dadurch gekennzeichnet, dass** die Stäbe (44; 144) in mindestens drei nicht-koplanare Richtungen, vorzugsweise in mindestens vier nicht-koplanare Richtungen, ausgerichtet sind.

3. Schaufel (26) nach einem der Ansprüche 1 bis 2, **dadurch gekennzeichnet, dass** die Verstärkung (40) mehr als 60 %, vorzugsweise mehr als 80 %, der Dicke der Schaufel zwischen der Druckfläche (46) und der Saugfläche (48) einnimmt.

4. Schaufel (26) nach einem der Ansprüche 1 bis 3, **dadurch gekennzeichnet, dass** die Volumendichte des Netzes zwischen der Druckfläche (46) und der Saugfläche (48) in Abhängigkeit von der Höhe der Schaufel (26) und/oder von der Vorderkante (36) zur Hinterkante (38) variiert.

5. Schaufel (26) nach einem der Ansprüche 1 bis 4, **dadurch gekennzeichnet, dass** die Verstärkung (40) außerdem eine oder mehrere Wände (42) umfasst, die die Vorderkante und/oder die Hinterkante und/oder die Druckfläche und/oder die Saugfläche der Schaufel (26) bilden, wobei die genannte(n) Wand(en) vorzugsweise einstückig mit dem Netz ausgebildet ist/sind.

6. Schaufel (26) nach einem der Ansprüche 1 bis 5, **dadurch gekennzeichnet, dass** die Matrix (50) und die Verstärkung (40) aus unterschiedlichen Materialien bestehen, wobei die Matrix (50) ein thermoplastisches Harz und die Verstärkung (40) Metall, vorzugsweise Titan, enthält.

7. Schaufel (26) nach Anspruch 6, **dadurch gekennzeichnet, dass** die Verstärkung (40) aus Material besteht und durch ein zusätzliches Herstellungsverfahren in Schichten hergestellt wird.

8. Turbomaschine mit mindestens einer Schaufel, **dadurch gekennzeichnet, dass** die mindestens eine Schaufel einem der Ansprüche 1 bis 7 entspricht.

9. Iteratives Verfahren zur Herstellung einer zusammengesetzten Turbomaschinenschaufel (26), wobei die Schaufel (26) eine Matrix (50), eine Verstärkung (40), eine Vorderkante (36), eine Hinterkante (38), eine Druckfläche (46) und eine Saugfläche (48) aufweist, die sich von der Vorderkante zur Hinterkante erstreckt, die Verstärkung (40) ein Netz umfasst, wobei das Netz eine dreidimensionale Struktur bildet, die sich über den größten Teil der Dicke der Schaufel (26) zwischen der Druckfläche (46) und der Saugfläche (48) erstreckt, **dadurch gekennzeichnet, dass**
die dreidimensionale Struktur der Bewehrung eine einheitliche Struktur mit Stäben ist, die durch Verbindungsknoten miteinander verbunden sind, wobei die Kontinuität des Materials gewährleistet ist, und
die Matrix (50) und die Verstärkung (40) gleichzeitig durch Additive Manufacturing, vorzugsweise auf Pulverbasis, hergestellt werden.

10. Verfahren nach Anspruch 9, **dadurch gekennzeichnet, dass** es die Wiederholung der folgenden Schritte umfasst:
(a) Ablagerung von Füllmaterial, das die Verstärkung bildet (200; 300);
(b) Kohäsion des die Verstärkung bildenden Füllmaterials (202; 302);
(c) Kühlung (204; 304);
(d) Abscheidung von matrixbildendem Füllmaterial (206; 306);
(e) Kohäsion des die Matrix bildenden Füllmaterials (208; 308);
wobei Schritt c) Kühlung (204; 304) optional ist.

11. Verfahren nach Anspruch 10, **dadurch gekennzeichnet, dass** die Schritte (a) und (d) gleichzeitig ausgeführt werden und/oder die Schritte (b) und (e) gleichzeitig ausgeführt werden.

12. Verfahren nach einem der Ansprüche 9 bis 11, **dadurch gekennzeichnet, dass** die Schaufel nach Anspruch 2 ausgelegt ist und die Mehrheit der Stäbe (44; 144) in Bezug auf die Schichten geneigt ist, vorzugsweise um mehr als 5° geneigt, noch bevorzugter um mehr als 15° geneigt.

13. Verfahren nach einem der Ansprüche 9 bis 12, **dadurch gekennzeichnet, dass** die Schaufel nach Anspruch 2 ausgelegt ist und die Lagen in einer Stapelrichtung gestapelt werden, wobei die Stäbe (44; 144) gegenüber der Stapelrichtung vorwiegend geneigt sind, vorzugsweise um mehr als 10°, noch bevorzugter um mehr als 20°.

14. Verfahren nach einem der Ansprüche 9 bis 13, **dadurch gekennzeichnet, dass** die Schaufel dem Anspruch 2 entspricht und die Rauigkeit Ra der Stäbe (44; 144) größer als 2 µm, vorzugsweise größer als 10 µm, besonders bevorzugt größer als 50 µm ist.

15. Verfahren nach einem der Ansprüche 9 bis 14, **dadurch gekennzeichnet, dass** die Schichtdicke weniger als 200 µm, vorzugsweise weniger als 50 µm, besonders bevorzugt weniger als 10 µm beträgt.

## Claims

1. Blade (26) of a turbomachine (2), the blade (26) comprising a composite material with a matrix (50) and a reinforcement (40) comprising a mesh, the blade (26) having a leading edge (36) and a trailing edge (38), an intrados surface (46) and an extrados surface (48) extending from the leading edge to the trailing edge, wherein the mesh forms a three-dimensional structure extending over the majority of the thickness of the blade (26) between the intrados surface (46) and the extrados surface (48); **characterised in that** the three-dimensional structure of the reinforcement is a unitary structure with rods connected together with continuity of material by connecting nodes.

2. Blade (26) according to claim 1, **characterised in that** the rods (44; 144) are oriented in at least three non-coplanar directions, preferably in at least four non-coplanar directions.

3. Blade (26) according to any one of claims 1 to 2, **characterised in that** the reinforcement (40) occupies more than 60%, preferably more than 80%, of the thickness of the blade between the intrados surface (46) and the extrados surface (48).

4. Blade (26) according to any one of claims 1 to 3, **characterised in that** the volume density of the mesh between the intrados surface (46) and the extrados surface (48) varies according to the height of the blade (26) and/or from the leading edge (36) to the trailing edge (38).

5. Blade (26) according to any one of claims 1 to 4, **characterised in that** the reinforcement (40) further comprises one or more walls (42) forming the leading edge, and/or the trailing edge, and/or the intrados surface, and/or the extrados surface of the blade (26), said wall or walls preferably being unitary with the mesh.

6. Blade (26) according to any one of claims 1 to 5, **characterized in that** the matrix (50) and the reinforcement (40) are made of different materials, the matrix (50) comprising a thermoplastic resin and the reinforcement (40) comprising metal, preferably titanium.

7. Blade (26) according to claim 6, **characterised in that** the reinforcement (40) is made of material and produced by an additive production method in layers.

8. Turbomachine comprising at least one blade, **characterized in that** the at least one blade is according to any one of claims 1 to 7.

9. Iterative method of manufacturing a composite turbomachine blade (26), the blade (26) comprising a matrix (50), a reinforcement (40), a leading edge (36), a trailing edge (38), an intrados surface (46) and an extrados surface (48) extending from the leading edge to the trailing edge, the reinforcement (40) comprising a mesh, the mesh forming a three-dimensional structure extending over the majority of the thickness of the blade (26) between the intrados surface (46) and the extrados surface (48), **characterised in that**
the three-dimensional structure of the reinforcement is a unitary structure with rods connected to each other with continuity of material by connecting nodes, and
the matrix (50) and the reinforcement (40) are produced simultaneously by additive production in layers, preferably on a powder basis.

10. Method according to claim 9, **characterised in that** it comprises the repetition of the following steps:
(a) deposit of filler material forming the reinforcement (200; 300);
(b) cohesion of the filler material forming the reinforcement (202; 302);
(c) cooling (204; 304);
(d) deposit of filler material forming the matrix (206; 306);
(e) cohesion of the filler material forming the matrix (208; 308);
step c) cooling (204; 304) being optional.

11. Method according to claim 10, **characterised in that** steps (a) and (d) are carried out simultaneously and/or steps (b) and (e) are carried out simultaneously.

12. Method according to any one of claims 9 to 11, **characterised in that** the blade conforms to claim 2 and the majority of the rods (44; 144) are inclined relative to the layers, preferably inclined by more than 5°, more preferably inclined by more than 15°.

13. Method according to any one of claims 9 to 12, **characterised in that** the blade conforms to claim 2 and the layers are stacked in a stacking direction, the rods (44; 144) are predominantly inclined relative to the stacking direction, preferably by more than 10°, more preferably by more than 20°.

14. Method according to any one of claims 9 to 13, **characterised in that** the blade conforms to claim 2 and the roughness Ra of the rods (44; 144) is greater than 2 µm, preferably greater than 10 µm, more preferably greater than 50 µm.

15. Method according to any one of claims 9 to 14, **characterised in that** the layer thickness is less than 200 µm, preferably less than 50 µm, more preferably less than 10 µm.
